## Europäisches Patentamt

## European Patent Office

## Office européen des brevets

(19)

(11) Publication number: **0 021 712**
**B1**

(12) **EUROPEAN PATENT SPECIFICATION**

(45) Date of publication of patent specification: **31.08.83**

(51) Int. Cl.³: **G 02 B 5/14**

(21) Application number: **80301950.4**

(22) Date of filing: **10.06.80**

(54) Dielectric waveguides and method of propagating polarized electromagnetic waves and communication apparatus and system using such waveguides and method.

(30) Priority: **19.06.79 GB 7921308**
**03.03.80 US 126416**

(43) Date of publication of application:
**07.01.81 Bulletin 81/1**

(45) Publication of the grant of the patent:
**31.08.83 Bulletin 83/35**

(84) Designated Contracting States:
**DE FR GB IT NL**

(56) References cited:
**GB - A - 2 012 983**
**US - A - 3 813 141**
**US - A - 4 106 847**

**APPLIED OPTICS, vol. 17, no. 18, September 1978 V. RAMASWAMY et al.: "Polarization characteristics of noncircular core single-mode fibers", pages 3014—3017**
**ELECTRONICS LETTERS, vol. 15, no. 13, 21 June 1979 "Polarisation in optical-fibre waveguides with elliptical cores" pages 380—382**

(73) Proprietor: **ANDREW CORPORATION**
**10500 West 153rd Street**
**Orland Park Illinois 60462 (US)**

(72) Inventor: **Dyott, Richard Burnaby**
**15134 Quail Hollow Drive**
**Orland Park Illinois (US)**

(74) Representative: **Baker, Arthur et al,**
**c/o EDWARD EVANS & CO. Chancery House 53-64 Chancery Lane**
**London WC2A 1SD (GB)**

(56) References cited:
**JOURNAL OF APPLIED PHYSICS, vol. 33, no. 11, November 1962 C. YEH: "Elliptical dielectric waveguides", pages 3235—3243**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Dielectric waveguides and method of propagating polarized electromagnetic waves and communication apparatus and system using such waveguides and method

## Technical field of the invention

The present invention relates to dielectric waveguides, such as optical fibre waveguides which are used to propagate electromagnetic waves having wavelengths within the visible spectrum or the waveband used for optical signals in communication systems.

## Background art

As is well known, optical fibres having cores of elliptical cross section have good polarization holding properties when the difference $\Delta n$ between the refractive indices $n_1$ and $n_2$ of the fibre core and cladding, respectively, is relatively large. This large $\Delta n$ can maximize the difference $\Delta \beta$ between the propagation constants $\beta_L$ and $\beta_S$ of the two fundamental modes of the signal propagated along the major (long) and minor (short) axes of the elliptical cross section, and the maximum $\Delta \beta$ in turn minimizes coupling between the two fundamental modes. Thus, an optical wave launched into such a fibre in the fundamental mode having the electric field substantially parallel to the major axis of the ellipse can be reliably picked up by polarization sensitive devices at the other end of the fibre.

Such a wave is theoretically propagated along the major axis of the ellipse in a single mode, but in actual practice it is difficult to attain perfect alignment of the wave source and the major axis of the ellipse. Consequently, the wave is propagated in two orthogonally polarized fundamental modes aligned with both the major and minor axes of the ellipse. The elliptical configuration of the fibre core tends to hold these two fundamental modes in alignment with the respective axes of the ellipse along the entire length of the fibre.

Another known characteristic of optical fibres with elliptical cores is that the maximum difference $\Delta \beta$ between the propagation constants $\beta_L$ and $\beta_S$ of the two orthogonally polarized fundamental modes occurs in the region where the unwanted higher order modes are cut off. (Unlike the higher order modes the fundamental modes have no lower frequency cutoff.) As already mentioned, operation at maximum $\Delta \beta$ minimizes coupling between the two fundamental modes to preserve good polarization of the signal. However, even then accidental coupling between the two fundamental modes still tends to reduce the bandwidth of the waveguide.

An object of the invention is to provide a dielectric waveguide of elongate cross section, which virtually eliminates any adverse effect from unwanted coupling between the two orthogonally polarized fundamental modes of the transmitted signal while operating in the region where the higher order modes are cut off. Thus, one specific object of the invention is to provide such a dielectric waveguide which avoids any reduction in the bandwidth of the waveguide due to unwanted coupling between the two fundamental modes.

Another important object of the invention is to provide an elliptical-core optical fibre of the foregoing type which can be efficiently and economically manufactured at high production rates.

Other objects and advantages of the invention will be apparent from the following detailed description.

## Disclosure of the invention

The present invention satisfies the foregoing objectives by providing an elliptical-core optical fibre, or other dielectric waveguide of elongate cross section, which equalizes the group velocities of the two orthogonally polarized fundamental modes of a signal propagated therethrough while operating in the region where the higher order modes are cut off. As long as these group velocities are equal, any accidental coupling between the two fundamental modes is unimportant because the signals carried by the two fundamental modes will arrive simultaneously at the end of the optical fibre or dielectric waveguide. As a result, there is no reduction in the bandwidth of the waveguide due to the accidental coupling.

This invention stems in part from the discovery that an elliptical-core optical fibre can be made to operate in a region in which higher order modes are cut off, while at the same time equalizing the group velocities of the two orthogonally polarized fundamental modes. It was previously known that the difference between the propagation constants and the phase velocities of the two fundamental modes could be maximized in the region in which higher order modes are cut off, but it was believed that the group velocities like the propagation constants and the phase velocities of the fundamental modes would be dissimilar in that region. Although it is true that for all ratios of major to minor axes there is a point where the group velocities of the two fundamental modes are equal, it is only when the ratio exceeds a certain value that this point occurs below the higher mode cut-off, i.e., in the region where only the two fundamental modes can propagate. Consequently, it is possible to choose an operating point such that the coupling between the two fundamental modes can be made small (by having the difference in phase velocities large) while at the same time rendering insignificant (by equalizing the group velocities) any accidental coupling between the fundamental modes.

As a result of this invention, an elliptical-core optical fibre can be made to provide not only excellent preservation of polarization of the transmitted signal in an operating region in which higher order modes of the signal are cut off, but also equal group velocities of the two fundamental modes of the transmitted signal. The end result of this combination of characteristics is that optical signals within a wide bandwidth can be transmitted through long lengths of optical fibres and then picked up by polarization sensitive detectors. Thus, the optical fibres provided by this invention are particularly useful for long-distance communication systems, or other applications where it is important to have a highly polarized signal which can be reliably detected and, if necessary, re-transmitted.

Embodiments of the invention will now be described, by way of example, with reference to the accompanying drawings.

Brief description of the drawings

Figure 1 is a schematic diagram of a single communication system incorporating a dielectric waveguide embodying the invention;

Figure 2 is a cross-section of a preferred optical fibre for use as the dielectric waveguide in the system shown in Figure 1;

Figures 3 to 5 are cross-sections of three alternative forms of optical fibres for use as the dielectric waveguide in the systems shown in Figure 1;

Figure 6 is a schematic illustration of the modal beat pattern (represented by the horizontal broken line) of scattered light from the optical fibre of Figure 2 when circularly polarized light having a pitch

$$p \sim \frac{1}{\Delta} \beta$$

is launched into the fibre;

Figure 7 is a graph showing

$$\frac{\Delta \overline{\beta}}{(\Delta n)^2}$$

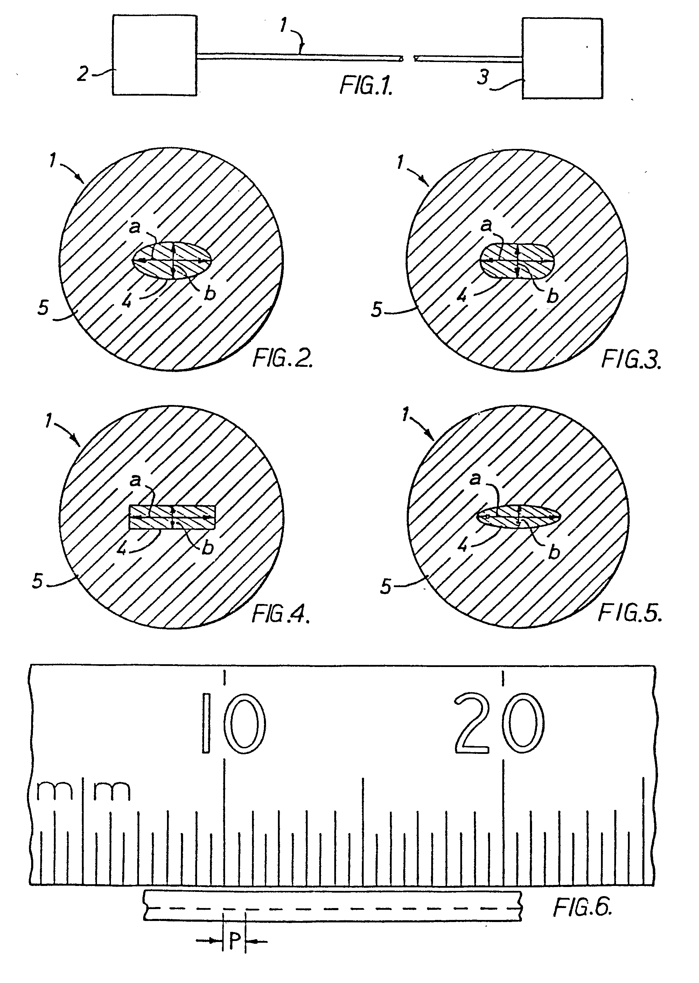

plotted against the parameter V for cores of various elliptical cross-sections in the fibre of Figure 2;

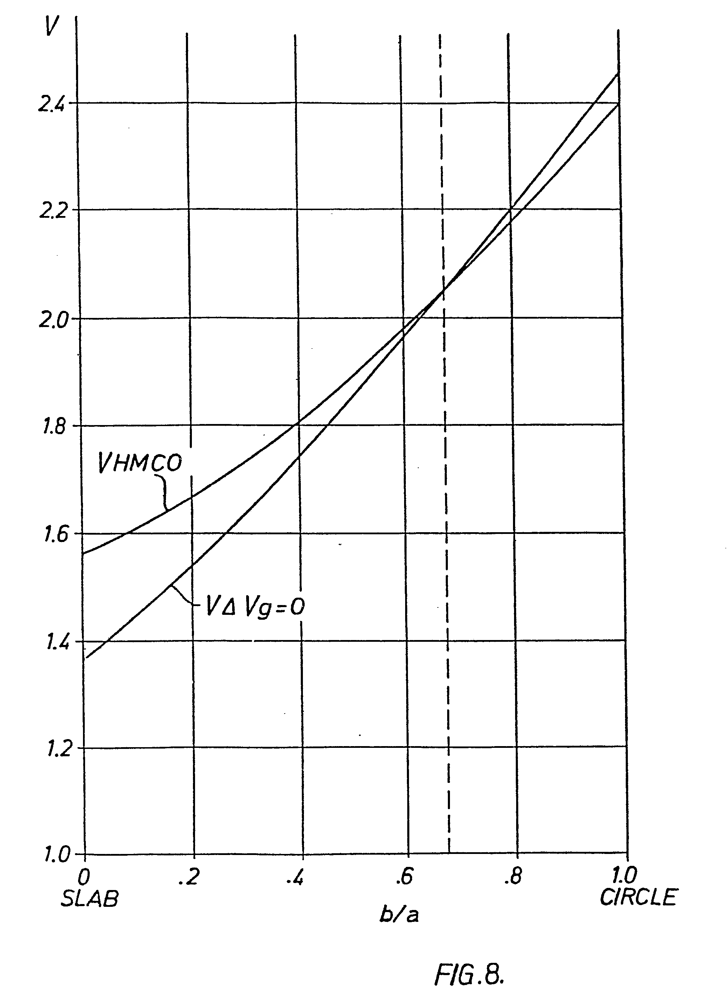

Figure 8 is a graph showing the parameter V plotted against the ratio b/a for different operating conditions in the fibre of Figure 2; and

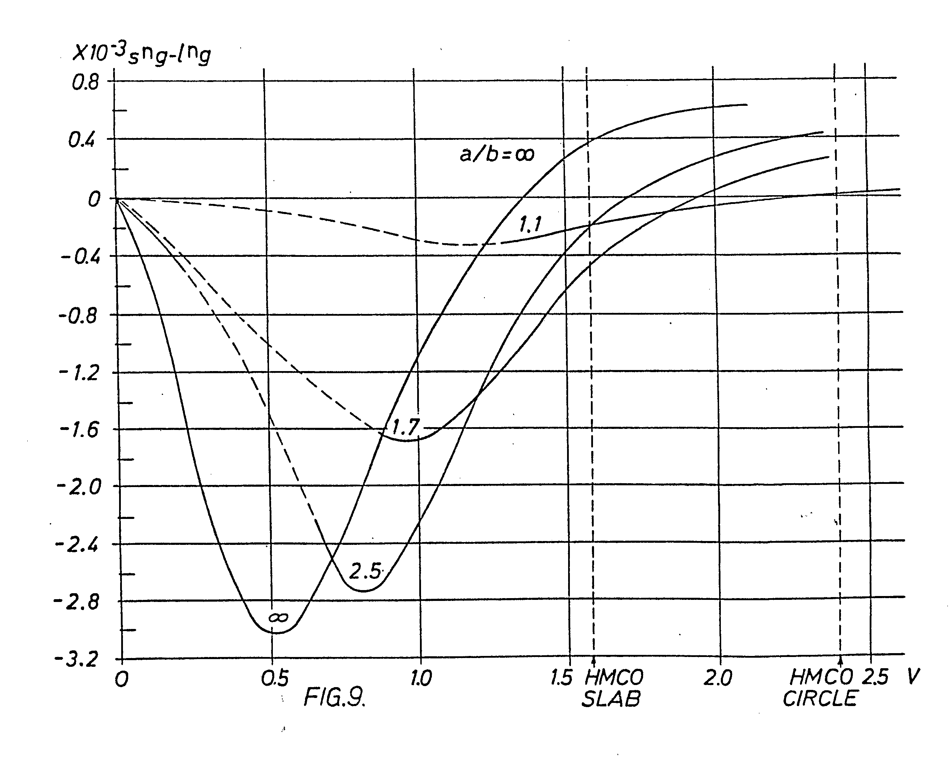

Figure 9 is a graph showing the difference $\Delta n_g$ in the group indices $n_g = c/v_g$ of the two fundamental modes plotted against the parameter V for cores of various elliptical cross-sections in the fibre of Figure 2.

Best mode for carrying out the invention

Referring first to Figures 1 and 2, the illustrative communication system comprises an optical fibre waveguide 1 which extends between a source 2 of polarized electromagnetic radiation having a wavelength in the visible spectrum and a polarization sensitive detector 3. As shown in Figure 2, the optical fibre waveguide 1 comprises a wave propagating member or core 4 of elliptical cross-section of the core 4 has a major axis a of a length which is substantially 2.5 times the length of the minor axis b, i.e., the ratio a/b=2.5.

The core 4 is preferably formed by a vapour deposition process in which suitable doping materials such as the oxides of germanium and phosphorus are deposited on the inner surface of a silica tube which is then collapsed to form a solid rod which constitutes the doped core 4 of a surrounding silica cladding 5. The silica rod is then drawn down until the core 4 and cladding 5 are reduced to the desired dimensions. The elliptical core may be formed by abrading diametrically opposed portions of the outside surface of the silica tube, before it is collapsed and drawn, to form a pair of flat lands diametrically opposed to each other and extending continuously along the length of the tube.

In an alternative form of the core 4 illustrated in Figure 3, the elongate cross-section is substantially oval and the ratio of the length of the major axis a to the length of the minor axis b is a/b=2.5. In yet another form of the core 4 illustrated in Figure 4, the elongate cross-section is substantially rectangular and the ratio of the length of the major axis a to the length of the minor axis b is a/b=3.0. In a further form of the core 4 illustrated in Figure 5, the elongate cross-section is again elliptical, but in this case the ratio of the length of the major axis a to the length of the minor axis b is a/b=3.5.

In use of the communication system illustrated in Figure 1, a polarized electromagnetic wave is applied by the source 2 as an input to the optical waveguide 1, so that the direction of polarization is aligned with the major axis a, is propagated by the waveguide 1, and is received by the detector 3 without any significant change in the direction of polarization relative to the axes a and b. As will be explained better with reference to Figures 6 to 9 the preservation of the direction of polarization of the propagated wave is a characteristic of the wave propagating member or core 4.

For any given set of values for the signal wavelength and the refractive indices of the core and cladding, the elongate cross section of the core 4 must be dimensioned to ensure that higher order modes of the optical signal will be cut off. This is essential to maintain a maximum bandwidth for the waveguide. Figure 6 shows the small pitch p=0.75 mm of the modal beat pattern when circularly polarised light is launched into the fibre of Figure 2. The particular parameter that is normally used to determine whether or not a given set of properties will result in higher mode cutoff is "V", which is defined as:

$$V = \frac{\pi b}{\lambda_o}(n_1{}^2 - n_2{}^2)^{1/2}$$

where
  $n_1$=index of refraction of core
  $n_2$=index of refraction of cladding
  $\lambda_o$=free space wavelength

Figure 8 shows the higher mode cutoff ("HMCO") values of this parameter V at different values of the b/a ratio for an optical fibre having an elliptical core $n_1$=1.535, and $n_2$=1.47. Only the two fundamental modes of the signal can be propagated through such a fibre as long as V has a value below the $V_{HMCO}$ curve at any given value of the ratio b/a.

In keeping with the invention, the dimensions of the elliptical cross section of the core are chosen to provide a b/a ratio that permits V to have a value that is not only below the higher mode cutoff value ($V_{HMCO}$), but also produces equal group velocities for the two fundamental modes ($V_{\Delta vg=0}$). The values of the parameter V that provide these equal group velocities at different b/a values in the particular fibre described above are given by the curve $V_{\Delta vg=0}$ in Figure 8. It can be seen that at b/a values above about 0.67, a/b=1.54, equal group velocities can be attained only at V values above the higher mode cutoff level, i.e., the $V_{\Delta vg=0}$ curve is above the $V_{HMCO}$ curve. At b/a values below 0.67, however, the $V_{\Delta vg=0}$ curve drops below the $V_{HMCO}$ curve so that equal group velocities can be attained along the higher mode cutoff. Thus, with the proper values for b/a and V, the dielectric waveguide can provide both higher mode cutoff and equal group velocities for the two fundamental modes. For example, referring to Figure 8, b/a might be selected to have a value of 0.40 (a/b=2.5), at which value V should be 1.74 in order to provide equal group velocities, V for higher mode cutoff being at the greater value of 1.81. Having thus determined the value of V, the value of $b$ can be determined from the equation:

$$V=\frac{\pi b}{\lambda_o}[n_1{}^2-n_2{}^2]^{1/2}$$

Using the values for $n_1$ and $n_2$ used previously:, and at a wavelength $\lambda$ to 1500 nanometers.

$$1.74=\frac{\pi b}{1500\times10^{-9}}[(1.535)^2-(1.47)^2]^{1/2}$$

$$b=\frac{(1.74)(1500\times10^{-9})}{\pi[(1.535)^2-(1.47)^2]^{1/2}}$$

=1.88$\times10^{-6}$m.
Since a/b was originally selected to be 2.5,
  a=2.5b
  =(2.5)(1.88$\times10^{-6}$)
  =4.7$\times10^{-6}$m.

The values for the $V_{\Delta vg=0}$ curve in Fig. 8 can be determined by using the transcendental equation for elliptical core fibers. The characteristic equation for elliptical dielectric guides can be presented in a form exactly analogous with that commonly used to describe guides with circular cross-sections. For even modes (i.e., those where the axial H-field is described by an even radial Methieu function) we can write:

$$\left(\left(\frac{\varepsilon_1}{\varepsilon_2}\right)\frac{w2}{u}\frac{S'e_m}{Se_m}\frac{wG'ek_m}{Gek_m}\right)$$

$$\left(\frac{w2}{u}\cdot\frac{C'e_m}{Ce_m}+\frac{wF'ek_m}{Fek_m}\right)$$

$$=\left[\frac{\beta mk_2b^2}{4u^2}\left(\frac{\varepsilon_1}{\varepsilon_2}-1\right)\right]^2$$

where $\varepsilon_1$ is the dielectric constant of the core, $\varepsilon_2$ is the dielectric constant of the cladding, $\beta$ is the modal propagation constant and $k_2$ is the cladding wave number, u and w are defined as for the circular guide using the semi-minor axis b/2 as the equivalent radius. $Se_m$, $Ce_m$, $Gek_m$, $Fek_m$ represent Mathieu functions, and the derivations of $Se_m$, $Ce_m$ are taken with respect to u(cosh $\zeta$/sinh $\zeta$) and of $Gek_m$, $Fek_m$ with respect to w(cosh $\zeta$/sinh $\zeta_o$), where $\zeta_o$=coth$^{-1}$ (a/b).

The characteristic equation for the odd modes can be found by merely interchanging $Se_m$ and $Ce_m$' $Gek_m$ and $Fek_m$. The differential d$\omega$/d$\beta$ (where $\omega$ is the radian frequency $2\pi f$=$2\pi c/\lambda o$) is the group velocity vg of the particular mode represented by the other values in the equation. Thus, when the group velocities $vg_L$ and $vg_S$ of the two fundamental modes are equal, the two differentials d$\omega$/d$\beta_L$ and d$\omega$/d$\beta_S$ are equal. The equation d$\omega$/d$\beta_L$=d$\omega$/d$\beta_S$ can then be solved for $b$, and the resulting value of $b$ can be used to determine the value of V using the standard equation for V as set forth above.

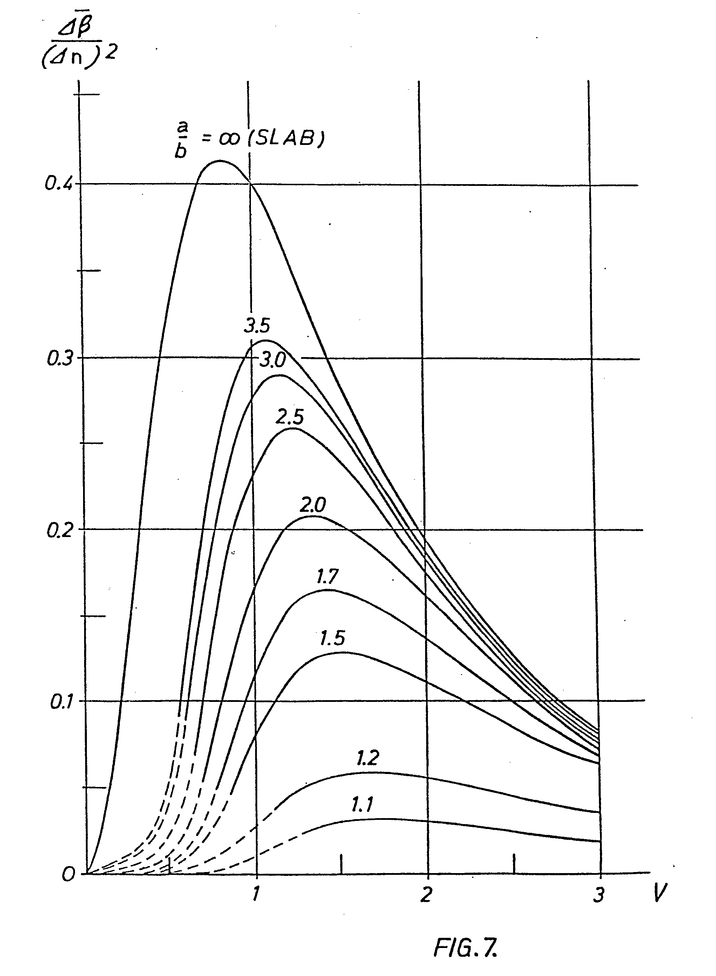

As can also be seen from Figures 7 and 8, the V value at which the maximum $\Delta\beta$ is achieved is always lower that the V value at which equal group velocities are achieved. Thus equal group velocities and maximum $\Delta\beta$ cannot both be attained at the same time in a given fibre. However, although $\Delta\beta$ cannot be maximized, it can still be made quite large to inhibit coupling between the two fundamental modes. This can be seen most clearly in Figure 7, which illustrates the variations in $\Delta\beta/(\Delta n)^2$ as a function of V, for different a/b ratios. In the case of the fibre just described, V=1.74 to equalize the group velocities and a/b=2.5, it can be seen from Figure 7 that $\Delta\beta/(\Delta n)^2$ will not be at its peak value of 0.255 (84% of maximum). The coupling between the two fundamental modes in this fibre is less than —40 dB at an operating wavelength of 633 nanometers when a complete turn of the fibre is wound round a rod 2mm in diameter. As long as the group velocities of the fundamental modes are equalized, a small amount of coupling between the fundamental modes is unimportant as far as group delay is concerned; i.e., the two fundamental modes of the transmitted signal will arrive at the signal receiver at the same time, so there is no reduction in the bandwidth of the dielectric waveguide.

## Claims

1. A dielectric waveguide comprising a wave propagating member having a core with a refractive index $n_1$ and a cladding with a refractive index $n_2$, the core having an elongate cross-section with a major axis $a$ and a minor axis $b$, characterized in that the values of $n_1$, $n_2$, $a$ and $b$ are such that only the two orthogonally polarized fundamental modes of a wave with a prescribed wavelength can propagate through the core, thereby avoiding propagation of unwanted higher order modes of the wave, and such that the group velocities of the two orthogonally polarized fundamental modes are substantially equal and such that the propagation constants of said fundamental modes are substantially different so as to minimize coupling therebetween.

2. A dielectric waveguide as claimed in Claim 1, characterized in that said wave propagating member is an optical fibre having a core with an elliptical cross-section.

3. A dielectric waveguide as claimed in Claim 1 or Claim 2, characterized in that the ratio of the length of the major axis to the length of the minor axis of said elongate cross-section is in the range of from 2.0 to 3.5.

4. A method of propagating polarized electromagnetic waves along a dielectric waveguide, said method comprising the steps of applying the polarized electromagnetic wave as an input to a wave propagating member having a core with a refractive index $n_1$ and a cladding with a refractive index $n_2$, the core having an elongate cross-section with a major axis $a$ and a minor axis $b$, characterized in that the values of $n_1$, $n_2$, $a$ and $b$ are such that only the two orthogonally polarized fundamental modes of a wave with a prescribed wavelength can propagate through the core, thereby avoiding propagation of unwanted higher order modes of the wave and such that the group velocities of the two orthogonally polarized fundamental modes are substantially equal and such that the propagation constants of said fundamental modes are substantially different so as to minimize coupling therebetween.

5. A method as claimed in Claim 4, characterized in that said wave propagating member is an optical fibre having a core with an elliptical cross-section.

6. A method as claimed in Claim 4 or Claim 5, characterized in that the ratio of the length of the major axis of the length of the minor axis of said elongate cross-section is in the range of from 2.0 to 3.5.

7. Use of at least one dielectric waveguide as claimed in any one of Claims 1 to 3 in a communication apparatus.

8. Use of the method of propagating polarized electromagnetic waves as claimed in any one of Claims 4 to 6 in a communication system.

## Patentansprüche

1. Dielektrischer Wellenleiter, der einen Wellenausbreitungsträger mit einem Kern (4) mit einem Brechungsindex $n_1$ und einem Überzug (5) mit einem Brechungsindex $n_2$ aufweist, wobei der Kern einen langgestreckten Querschnitt mit einer größeren Achse a und einer kleineren Achse b hat, dadurch gekennzeichnet, daß die Werte von $n_1$, $n_2$, a und b so gewählt sind, daß sich nur zwei orthogonal polarisierte Grundschwingungen der Welle mit einer vorgeschriebenen Wellenlänge durch den Kern fortpflanzen können, wobei sie die Fortpflanzung ungewünschter höherer Schwingungsordnungen der Welle verhindern, und zwar solche Grundschwingungen, bei denen die Gruppengeschwindigkeiten der beiden orthogonal polarisierten Grundschwingungen im wesentlichen gleich sind und so bemessen, daß die Ausbreitungskonstanten der Grundschwingungen so wesentlich unterschiedlich sind, daß die Kopplung zwischen belden auf ein Minimum reduziert ist.

2. Wellenleiter nach Anspruch 1, dadurch gekennzeichnet, daß der Kern (4) des Wellenausbreitungsträgers eine optische Faser oder ein Faserbündel mit einem elliptischen Querschnitt ist.

3. Wellenleiter nach Anspruch 1 oder 2, dadurch gekennzeichnet, daß das Verhältnis der Länge der größeren Achse a zur kleineren Achse b im Bereich von 2,0 bis 3,5 liegt.

4. Verfahren zur Ausbreitung polariserter elektromagnetischer Wellen entlang eines dielektrischen Wellenleiters, gekennzeichnet durch folgende Verfahrensschritte: die polarisierte elektromagnetische Welle wird an den Eingang eines Wellenausbreitungsträgers eines dielektrischen Wellenleiters angelegt, der einen Kern (4) mit einem Brechungsindex $n_1$ und einen Überzug (5) mit einem Brechungsindex $n_2$ aufweist, wobei der Kern einen langgestreckten Querschnitt mit einer größeren Achse a und einer kleineren Achse b hat, und daß die Werte von $n_1$, $n_2$, a und b so gewählt sind, daß sich nur zwei orthogonal polarisierte Grundschwingungen der Welle mit einer vorgeschriebenen Wellenlänge durch den Kern fortpflanzen können, wobei sie die Fortpflanzung ungewünschter höherer Schwingungsordnungen der Welle verhindern, und zwar solche Grundschwingungen, bei denen die Gruppengeschwindigkeiten der beiden orthogonal polarisierten Grundschwingungen im wesentlichen gleich sind und so bemessen, daß die Ausbreitungskonstanten der Grundschwingungen so wesentlich unterschiedlich sind, daß die Kopplung zwischen beiden auf ein Minimum reduziert ist.

5. Verfahren nach Anspruch 4, dadurch gekennzeichnet, daß der Kern (4) des Wellenausbreitungsträgers eine optische Faser oder ein Faserbündel mit einem elliptischen Querschnitt ist.

6. Verfahren nach Anspruch 4 oder 5, dadurch gekennzeichnet, daß das Verhältnis der Länge der größeren Achse a zur kleineren Achse b im Bereich von 2,0 bis 3,5 liegt.

7. Verwendung wenigstens eines dielektrischen Wellenleites nach einem der Ansprüche 1 bis 3.

8. Verwendung des Verfahrens von sich ausbreitenden polarisierten elektromagnetischen Wellen nach einem der Ansprüche 4 bis 6 in einer Nachrichtenübertragungsanlage.

## Revendications

1. Guide d'ondes diélectrique comprenant un organe de propagation d'ondes ayant une âme dont l'indice de réfraction est $n_1$ et un revêtement dont l'indice de réfraction est $n_2$, l'âme ayant une section transversale allongée avec un grand axe $a$ et un petit axe $b$, caractérisé par le fait que les valeurs de $n_1$, $n_2$, $a$ et $b$ sont telles que seuls les deux modes fondamentaux polarisés perpendiculairement l'un à l'autre d'une onde d'une longueur d'onde prédéterminée peuvent se propager à travers l'âme, pour ainsi éviter la propagation de modes d'ordres plus élevés indésirables de l'onde, et que les vitesses de groupe des deux modes fondamentaux polarisés perpendiculairement l'un à l'autre sont sensiblement égales et que les constantes de propagation desdits modes fondamentaux sont sensiblement différentes, de façon à minimiser le couplage entre ceux-ci.

2. Guide d'ondes diélectrique selon la revendication 1, caractérisé par le fait que ledit organe de propagation des ondes est une fibre optique ayant une âme de section transversale elliptique.

3. Guide d'ondes diélectrique selon l'une des revendications 1 ou 2, caractérisé par le fait que le rapport de la longueur du grand axe à la longueur du petit axe de ladite section transversale allongée est compris entre 2,0 et 3,5.

4. Procédé pour propager des ondes électromagnétiques polarisées le long d'un guide d'ondes diélectrique, ledit procédé comprenant les opérations consistant à appliquer l'onde électromagnétique polarisée comme eptrée à un organe de propagation d'ondes ayant une âme dont l'indice de réfraction est $n_1$ et un revêtement dont l'indice de réfraction est $n_2$, l'âme ayant une section transversale allongée avec un grand axe $a$ et un petit axe $b$, caractérisé par le fait que les valeurs de $n_1$, $n_2$, $a$ et $b$ sont telles que seuls les deux modes fondamentaux polarisés perpendiculairement l'un à l'autre d'une onde d'une longueur d'onde prédéterminée peuvent se propager à travers l'âme, pour ainsi éviter la propagation de modes d'ordre plus élevés indésirables de l'onde et que les vitesses de groupe des deux modes fondamentaux polarisés perpendiculairement l'un par rapport à l'autre sont sensiblement égales, et que les constantes de propagation desdits modes fondamentaux sont sensiblement différentes, de façon à minimiser le couplage entre ceux-ci.

5. Procédé selon la revendication 4, caractérisé par le fait que ledit organe de propagation des ondes est une fibre optique ayant une âme de section transversale elliptique.

6. Procédé selon l'une des revendications 4 ou 5, caractérisé par le fait que le rapport de la longueur du grand axe à la longueur du petit axe de ladite section transversale allongée est compris entre 2,0 et 3,5.

7. Utilisation d'au moins un guide d'ondes diélectrique selon l'une des revendications 1 à 3.

8. Utilisation du procédé de propagation d'ondes électromagnétiques polarisées selon l'une des revendications 4 à 6, dans un système de communication.

FIG.1.

FIG.2.

FIG.3.

FIG.4.

FIG.5.

FIG.6.

FIG.7.

FIG.8.

FIG.9.